# EUROPÄISCHE PATENTANMELDUNG

(11) **EP 1 277 508 A2**
(43) Veröffentlichungstag der Anmeldung: **22.01.2003**
(21) Anmeldenummer: 02102034.2
(22) Anmeldetag: 17.07.2002
(51) Int. Cl.: B01D 53/84

(54) **Verfahren und Vorrichtung zum Beseitigen von Schadstoffen aus einem Abgasstrom**

(30) Priorität: 18.07.2001 DE 10134275; 28.11.2001 DE 20119395 U
(71) Anmelder: Grote, Herr Klaus, 26215 Wiefelstede (DE)
(72) Erfinder: Grote, Herr Klaus, 26215 Wiefelstede (DE)
(74) Vertreter: von Ahsen, Erwin-Detlef, Dipl.-Ing.

(57) **Zusammenfassung**

Die Erfindung bezieht sich auf ein Verfahren und eine Vorrichtung zum Beseitigen von, insbesondere beim anaeroben Abbau organischen Materials entstehenden, Schadstoffen aus einem Abgasstrom. Um ein solches Verfahren kostengünstig und in kleinem Maßstab durchführen zu können, ist das erfindungsgemäße Verfahren dadurch gekennzeichnet, daß ein Enzym feinstverteilt in den Abgasstrom eingebracht wird. Die erfindungsgemäße Vorrichtung ist dadurch gekennzeichnet, daß eine Reaktoranordnung einen Strömungsreaktor (10) und Einbringmittel (14, 15) aufweist, mittels derer mindestens ein Enzym in Lösung feinstverteilt in den Strömungsreaktor (10) einbringbar ist.

## Beschreibung

Die Erfindung betrifft ein Verfahren und eine Vorrichtung zum Beseitigen von, insbesondere beim anaeroben Abbau organischen Materials entstehenden, Schadstoffen aus einem Abgasstrom.

Diese Schadstoffe haben zumeist einen unangenehmen Geruch. Sie sind mitunter in höherer Konzentration gesundheitsgefährdend oder sogar toxisch. Speziell in Kläranlagen, Kompostieranlagen, in Tierkörperbeseitigungsanlagen, in Abgasströmen aus dem Autoklaven (Krankenhäuser/Laboratorien) oder in der Lebensmittelproduktion und bei der Viehhaltung in Stallungen und Güllegruben entstehen beim anaeroben Abbau organischen Materials insbesondere Schwefelwasserstoff, Thiole (Mercaptane) und diverse Stickstoffverbindungen, wie beispielsweise Ammoniak. Es sind verschiedene Verfahren gebräuchlich, diese Schadstoffe aus dem Abgasstrom zu beseitigen. Eine thermische Nachverbrennung bei circa 600 °C hat einen hohen Energiebedarf. Als kostengünstiges autothermes Verfahren ist diese Nachverbrennung erst bei sehr hohen Kohlenwasserstoffkonzentrationen im Abgasstrom einsetzbar. Nachteilig bei dieser Nachverbrennung ist in jedem Fall, daß Schwefelwasserstoff oder andere schwefelhaltige Verbindungen im Abgasstrom dabei stark oxidierende Säuren bilden. Dies führt zu erhöhter Korrosion. Bei einem katalytischen Nachverbrennung sind geringe Temperaturen ausreichend. Hierbei wirken sich allerdings Schwefelverbindungen im Abgasstrom bereits in geringen Konzentrationen schädlich auf den Katalysator aus. Bei der Adsorption der Schadstoffe an der Oberfläche eines Feststoffes, meist Aktivkohle, muß dieser Feststoff regelmäßig ausgetauscht und entsorgt oder aufwendig aufbereitet werden. Für das Auswaschen der Schadstoffe aus dem Abgasstrom ist schließlich ein großer anlagentechnischer Aufwand erforderlich. Insbesondere im kleineren Maßstab, wie er beispielsweise in der Viehhaltung vorkommt, ist dieses Gaswaschen unrentabel. Sogenannte Biowäscher, als Absorber mit integrierter Waschwasseraufbereitung mittels Mikroorganismen, sind was die Pflege dieser Mikroorganismen angeht, relativ heikel. Ein Gleichgewicht dieser Mikroorganismen darf nicht durch schwankende Konzentrationen der Schadstoffe beziehungsweise für diese Mikroorganismen toxische Schadstoffe gestört werden.

Das der Erfindung zugrundeliegende Problem ist es, ein Verfahren und eine Vorrichtung zum Beseitigen von Schadstoffen aus einem Abgasstrom anzugeben, mit denen sich auf kostengünstige Weise auch im kleinen Maßstab Schadstoffe effizient zumindest weitgehend aus einem Abgasstrom entfernen lassen.

Das Problem wird bei einem Verfahren der eingangs genannten Art dadurch gelöst, daß mindestens ein Enzym feinverteilt in den Abgasstrom eingebracht wird. Geeignete Enzyme lassen sich durch Fermentation geeigneter Substrate einfach herstellen. Die eingesetzten Enzyme sind Exoenzyme, die nach der Fermentation aus dem Fermenter separiet werden müssen. Das Enzym selber wird beim Abbau der Schadstoffe nicht verbraucht. Vielmehr wirkt es als Bio-Katalysator. Durch die feine Verteilung des Enzyms in dem Abgasstrom wird eine große katalytisch wirkende Oberfläche zur Verfügung gestellt. Auf eine Zersetzung der Enzyme durch ungeeignete Schadstoffkonzentrationen oder schädigende Schadstoffe braucht keine Rücksicht genommen zu werden, weil das Enzym permanent in ausreichender Menge nachdosiert wird. Das erfindungsgemäße Verfahren läßt sich quasi beliebig skalieren, so daß eine Anwendung sowohl im kleinsten Maßstab als auch großtechnisch problemlos möglich ist.

Vorzugsweise wird das Enzym in wäßriger Lösung als Nebel in den Abgasstrom eingebracht. Vorteilhaft hat sich dabei eine tensidische Lösung erwiesen. Die Tröpfchengröße sollte etwa 20 µm oder weniger betragen. Bei dieser Tröpfchengröße ergibt sich eine große Kontaktfläche mit dem umgebenden Abgasstrom. Außerdem ist der Nebel bei dieser Tröpfchengröße besonderes kondensationsstabil, wodurch eine lange Reaktionszeit mit stabilen Reaktionsbedingungen gewährleistet werden kann.

Bei einer Weiterbildung wird die Lösung unter hohem Druck in den Abgasstrom eingedüst. Der Druck kann vorzugsweise 80 bis 100 bar betragen. Als Einbringmittel können mindestens zwei Hochdruckdüsen verwendet werden, deren Eindüsrichtung etwa stromabwärts gerichtet ist. Das Enzym kann der Hochdruckdüse mittels einer Hochdruckpumpe mit dem erforderlichen Druck zugeführt werden. Auf diese Weise lassen sich einfach und effizient die gewünschten feinen Tröpfchengrößen erreichen.

Bei einer Weiterbildung der Erfindung wird das Enzym in einen ersten Stromabschnitt mit turbulenter Strömung in den Abgasstrom eingebracht. Durch die turbulente Strömung verteilten sich die Tröpfchen besonders gut in dem Abgasstrom. Dieser Stromabschnitt mit turbulenter Strömung läßt sich beispielsweise durch einen Abschnitt mit verhältnismäßig kleinem Querschnitt und somit verhältnismäßig großer Strömungsgeschwindigkeit verwirklichen.

Es ist auch möglich, daß Enzym in einem zweiten Stromabschnitt mit einer Stopfenströmung in den Abgasstrom einzubringen. Diese Stopfenströmung liefert laminare Strömungsverhältnisse ohne Toträume. Der Abgasstrom in dem zweiten Stromabschnitt kann dann zu dem Abgasstrom in dem ersten Stromabschnitt entgegengesetzt gerichtet sein. Insbesondere wenn dann der Abgasstrom in dem zweiten Stromabschnitt schraubenförmig um den Abgasstrom in dem ersten Stromabschnitt geleitet wird, ergibt sich eine hohe Verweildauer.

Das Enzym kann auch in einem zweiten Stromabschnitt mit einem Übergang von turbulenter zu laminarer Strömung in den Abgasstrom eingebracht werden. Auch hier ergibt sich noch eine verhältnismäßig gute Durchmischung. Dieser Übergang kann beispielsweise in einem Übergangsbereich von einem kleinere zu einem größeren Querschnitt erreicht werden. Es ist aber auch möglich, daß Enzym in einem dritten Stromabschnitt mit laminarer Strömung in den Abgasstrom einzubringen. Diese laminare Strömung stellt sich bei einem verhältnismäßig großen Querschnitt und somit geringer Strömungsgeschwindigkeit ein.

Bei einer Weiterbildung der Erfindung wird die Schadstoffkonzentration und/oder die Schadstoffzusammensetzung bestimmt. Abhängig von diesem Bestimmen wird die Enzymmenge, die Enzymart und/oder das Mischungsverhältnis eines Enzymgemisches aus mehreren Enzymen eingestellt. Auf diese Weise läßt sich das Verfahren auf wechselnde Schadstoffkonzentrationen einstellen. Es kann dabei außerdem speziell auf das jeweilige Schadstoffgemisch und somit auf größtmögliche Effizienz eingestellt werden.

Wenn in einem vierten Stromabschnitt stromabwärts vom Einbringen des Nebels dieser aus dem Abgasstrom entfernt wird, ist einerseits eine Weiterverwendung des Enzyms möglich. Anderseits ergeben sich besonders gute Abgaswerte. Beispielsweise kann die Enzymlösung zum Entfernen kondensiert werden. In diesem Fall ist das Verwenden eines Sumpfes zum Auffangen des Kondensats zweckmäßig.

Bei einer Weiterbildung wird zumindest ein Teil der kondensierten Enzymlösung in den Abgasstrom rückgeführt. Wenn die kondensierte Enzymlösung als Nebel, vorzugsweise mit einer Tröpfchengröße von etwa 50 bis 60 µm, rückgeführt, insbesondere unter einem geringen Druck, von vorzugsweise 10 bar eingedüst wird, wirken diese verhältnismäßig großen Tröpfchen als Kondensationskeime. Diese Tröpfchengröße und insbesondere das Starten der Kondensation läßt sich besonderes wirkungsvoll durch aufwärts gerichtete Niederdruckdüsen erreichen.

Das entfernte Kondensat kann in den Vorfluter einer Kläranlage oder in eine Güllegrube eingeleitet oder auf die Rotten einer Kompostieranlage aufgesprüht werden. Hier läßt sich das darin noch wirksame Enzym gleichfalls zur Beseitigung von unerwünschten Schadstoffen, insbesondere zum reduzieren der Geruchsbelästigung wiederverwenden.

Es ist aber auch denkbar, daß entfernte Kondensat in einem Bioreaktor aufzubereiten. Hierzu kann zunächst der pH-Wert des Kondensates bestimmt werden, und abhängig von diesem Bestimmen eine Säure oder eine Base zur Neutralisation zugesetzt werden. Als Säure eignet sich Phosphorsäure, als Base eignet sich Natronlauge, da in beiden Fällen keine unerwünschten chemischen Verunreinigungen entstehen.

Bei einer Weiterbildung wird dem Kondensat ein Oxidationsmittel, insbesondere Wasserstoffperoxid, zugesetzt. Es ist aber auch möglich, daß das Kondensat in einem Oxidationsreaktor, vorzugsweise mittels Frischluftzufuhr, oxidativ (aerob) biologisch abgebaut wird.

Die erfindungsgemäße Vorrichtung ist dadurch gekennzeichnet, daß die Reaktoranordnung einen Strömungsreaktor und Einbringmittel aufweist, mittels derer mindestens ein Enzym feinstverteilt in den Strömungsreaktor einbringbar ist.

Wenn der Strömungsreaktor einen ersten Abschnitt mit einem ersten Querschnitt, einen zweiten Abschnitt mit einem von dem ersten Querschnitt auf einen größeren zweiten Querschnitt ansteigenden Querschnitt und einen dritten Abschnitt mit dem zweiten Querschnitt aufweist, oder wenn der Strömungsreaktor einen ersten Abschnitt mit einem ersten Querschnitt und einen zweiten Abschnitt mit einem größeren zweiten Querschnitt aufweist, ist es zweckmäßig, daß das Enzym mittels der Einbringmittel mindestens in den ersten Abschnitt und/oder den zweiten Abschnitt einbringbar ist. Hier ergibt sich wegen der hohen Strömungsgeschwindigkeit und somit der Neigung zur turbulenten Strömung eine besonders gute Durchmischung. Bei einer Weiterbildung weisen die Einbringmittel mindestens eine Hochdruckdüse auf, deren Eindüsrichtung etwa stromabwärts gerichtet ist. Hierdurch lassen sich besonders feine Tröpfchen erzeugen, die sich gut in dem Gasstrom verteilen. Eine Hochdruckpumpe läßt sich zum Betreiben der Hochdruckdüse verwenden.

Bei einer Weiterbildung der erfindungsgemäßen Vorrichtung ist der erste Abschnitt in etwa axial in den zweiten Abschnitt angeordnet. Dabei ist die Strömung in dem zweiten Abschnitt zu der Strömung in dem ersten Abschnitt entgegengesetzt gerichtet. Der zweite Abschnitt kann außerdem Leitmittel zum Leiten der Strömung, vorzugsweise schraubenförmig um den ersten Abschnitt, aufweisen. Auf diese Weise ergibt sich eine besonders kurze Ausführung des Strömungsreaktors bei hoher Verweilzeit des Abgases im Reaktor.

Es ist dann von Vorteil, wenn Ableitmittel, vorzugsweise an der tiefsten Stelle des ersten Abschnitt des und des zweiten Abschnittes, zum Ableiten auskondensierende Flüssigkeit vorgesehen sind. Die Ableitmittel sollten mit dem Sumpf verbunden sein.

Der Strömungsreaktor kann in Strömungsrichtung ein monotones Gefälle haben. Damit ist gemeint, daß es stromabwärts keinen ansteigenden Bereich gibt. Auf diese Weise läuft die an der Wandung kondensierende Enzymlösung stets stromabwärts bis zum Sumpf.

Bei einer Weiterbildung der Erfindung ist eine Mischanordnung zum Anmischen und Bereithalten einer wäßrigen Lösung des Enzyms vorgesehen. Mittels dieser Mischanordnung läßt sich jederzeit das gewünschte Enzym-Wasser-Gemisch in der gewünschten Konzentration frisch bereithalten. Die Mischung muß immer frisch bereitet werden, weil das Enzym sehr gut biologisch abbaubar ist, sobald es als wäßrige Lösung vorliegt. Vorzugsweise sind Dosiermittel zum Dosieren des Enzyms aus einem Vorrat und eine Wasserzuführung, mit der vorzugsweise Wasser mittels eines Schwimmerschalters kontrolliert in einen Behälter einleitbar ist, vorgesehen.

Dadurch läßt sich auf einfache Weise kontinuierlich das gewünschte Enzym-Wasser-Gemisch herstellen.

Bei einer Weiterbildung der Erfindung sind Kondensationsmittel zum Entfernen des Enzyms aus dem Abgasstrom vorgesehen. Diese Kondensationsmittel sind vorzugsweise soweit stromabwärts von den Einbringmittel vorgesehen, daß sich eine Reaktionszeit von etwa vier bis zwanzig Sekunden ergibt. Im Anschluß an die Kondensationsmittel ist ein Sumpf zum Auffangen des Kondensats zweckmäßig.

Bei einer Weiterbildung ist eine Rückführung des Kondensats in den Strömungsreaktor in feinverteilter Form zum Starten der Kondensation vorgesehen. Diese Rückführung kann beispielsweise durch etwa stromaufwärts gerichtete Niederdruckdüsen erfolgen.

Als Kondensationsmittel läßt sich auf mindestens ein, vorzugsweise bewegbares, insbesondere drehbares Leitblech zum Ablenken des Abgasstromes verwenden. Insbesondere beim Verwenden mehrerer solcher Leitbleche läßt sich der Abgasstrom mehrfach umlenken, wodurch der Nebel weitgehend vollständig kondensiert werden kann.

Eine Weiterbildung der Erfindung zeichnet sich durch Ableitmittel zum Ableiten des Kondensats, vorzugsweise in den Vorfluter einer Kläranlage, eine Güllegrube, einen Bioreaktor oder auf die Rotten einer Kompostieranlage aus. Hier läßt sich das Kondensat umweltverträglich entsorgen. Insbesondere kann dabei die schadstoffzersetzende Wirkung des Enzyms ein weiteres Mal ausgenutzt werden.

Bei der Variante mit dem Bioreaktor sind Neutralisationsmittel zweckmäßig, die vorzugsweise einen Aufnehmer zum Erfassen des pH-Wertes des Kondensats und Dosiermittel zum Zugeben einer Säure oder einer Base zu dem Kondensat aufweisen.

Der Bioreaktor kann beispielsweise einen Festbettreaktor aufweisen. Für den Festbettreaktor bietet sich ein aktiviertes Festbett, bestehend aus Aktivkohle, Lavalit, Depotnährstoffen und Anthrazit an. Wenn außerdem Belüftungskerzen zum Belüften, vorzugsweise mittels Sauerstoff, insbesondere mittels Luft, vorgesehen sind, läßt sich eine besonders wirkungsvolle Oxidation in dem Festbettreaktor erreichen. Für die Belüftungskerzen bietet sich die Herstellung aus einem PTFE an, wobei vorzugsweise eine Porengröße von etwa 0,5 µm vorgesehen wird. Damit läßt sich auf einfache Weise ein effizientes Belüften erreichen.

Für die Anwendung in explosionsgefährdeten Bereichen kann es zweckmäßig sein, daß wesentliche oder alle Komponenten, insbesondere elektrische, explosionsgeschützt ausgeführt sind.

Im folgenden wird ein Ausführungsbeispiel der Erfindung anhand der Zeichnungen näher erläutert. Es zeigen:
- Fig. 1: ein Flußdiagramm eines Verfahrens mit den Erfindungsmerkmalen,
- Fig. 2: eine schematische Darstellung einer Vorrichtung mit den Erfindungsmerkmalen,
- Fig. 3: eine schematische Darstellung eines Bioreaktors für die Vorrichtung von Fig. 2, und
- Fig. 4: eine schematische Darstellung einer weiteren Vorrichtung mit den Erfindungsmerkmalen.

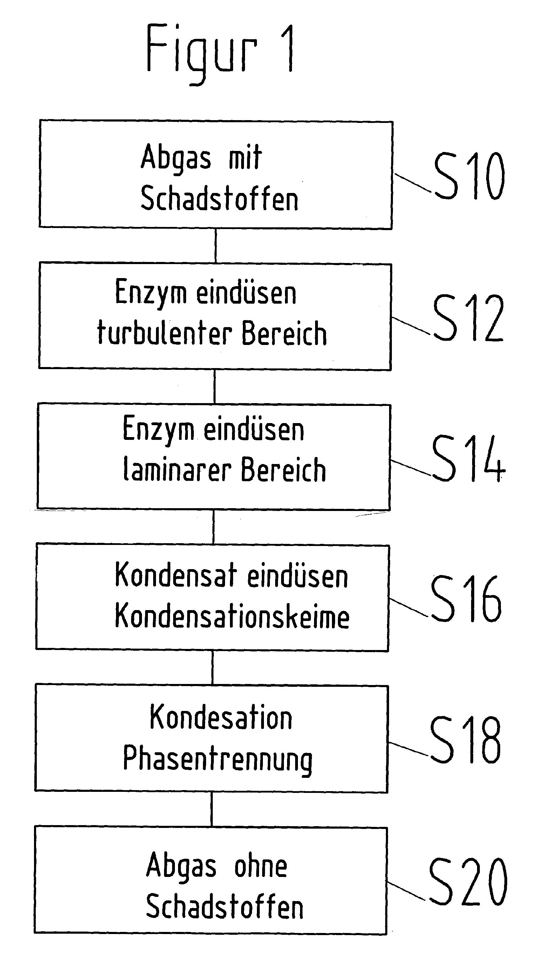

Fig. 1 zeigt ein Flußdiagramm eines Verfahrens mit den Erfindungsmerkmalen als ein Ausführungsbeispiel der Erfindung. Im Schritt S 10 wird ein mit Schadstoffen belasteter Abgasstrom zugeführt. Es handelt sich dabei insbesondere um Schadstoffe, die beim anaeroben Abbau organischen Materials entstehen. Ein solcher Abgasstrom kann in Kläranlagen, in Kompostieranlagen, in Güllegruben, in Tierkörperbeseitigungsanlagen, in Abgasströmen aus dem Autoklaven (Laboratorien/Krankenhäuser) oder in der Lebensmittelproduktion oder in Tierställen erzeugt werden. Als Schadstoffe können Schwefelwasserstoff, Ammoniak oder andere stickstoffhaltige Verbindung sowie Thiole vorkommen. Es bietet sich an, für einen bestmöglichen Wirkungsgrad im Schritt S 10 die Konzentration der Schadstoffe sowie deren Zusammensetzung zu messen, um anhand dieser Messung, die erforderliche Zusammensetzung eines Enzymgemisches sowie die sinnvollste Konzentration einer wäßrigen Lösung der Enzyme zu bestimmen.

Als nächstes wird im Schritt S 12 die wäßrige Lösung des Enzyms oder des Enzymgemisches in den Strömungskanal im Bereich einer turbulenten Strömung eingedüst. Hierbei ergibt sich eine effiziente Durchmischung, was zu einer hohen Effizienz der Abbaureaktion führt.

Im Schritt S 14 wird zusätzlich weiteres Enzym oder Enzymgemisch in einen Bereich laminarer Strömung eingedüst. Damit läßt sich die Abbauleistung weiter verbessern.

In Schritt S 16 wird Enzymgemisch mit verhältnismäßig großen Tröpfchen von 50 bis 60 µm entgegen der Strömungsrichtung eingedüst. Dadurch werden Kondensationskeime gebildet, wodurch die Kondensation der Enzymlösung einsetzt. Darüber hinaus findet eine Nachreinigung des Abgasstromes mit noch aktiven Enzymmolekülen statt.

In Schritt S 18 erfolgt dann die Kondensation und somit die Phasentrennung der Enzymlösung von dem Abgasstrom. Das in Schritt S 18 gewonnene Kondensat wird zum Eindüsen in Schritt S 16 verwendet.

In Schritt S 20 schließlich wird das Abgas im wesentlichen ohne Schadstoffbelastung freigesetzt. Mit dem beschriebenen Verfahren läßt sich leicht eine Reduzierung der Schadstoffe um 90 % und mehr erreichen.

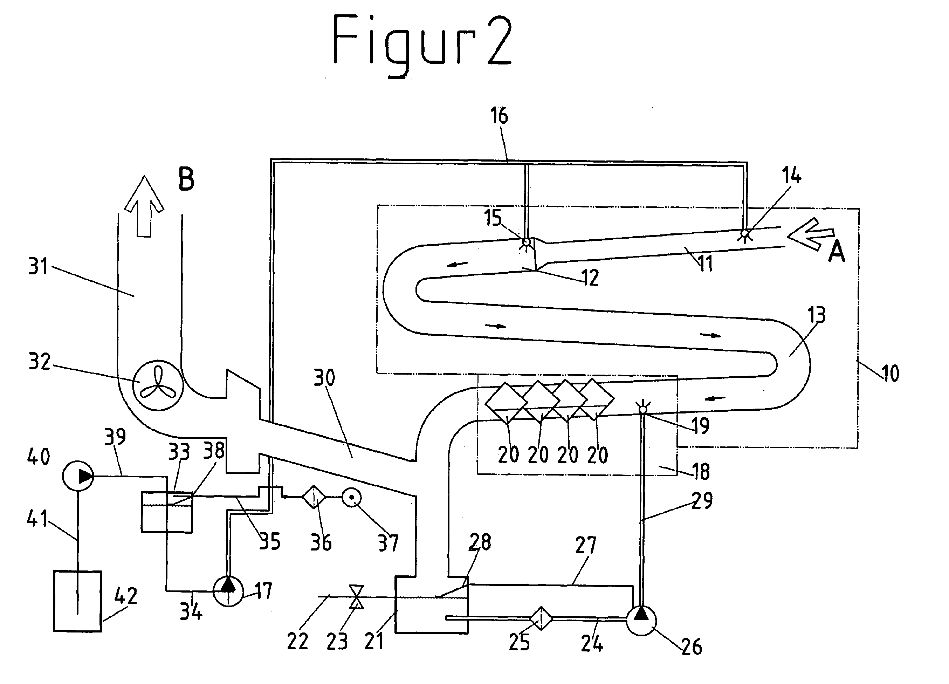

Fig. 2 zeigt eine Vorrichtung zum Beseitigen von Schadstoffen aus einem Abgasstrom als ein Ausführungsbeispiel der Erfindung. Die Vorrichtung weist einen Strömungsreaktor 10 auf. Der Strömungsreaktor 10 hat einen ersten Abschnitt 11 mit einem geringen (ersten) Querschnitt, einen Übergangsabschnitt 12 (zweiter Abschnitt) mit einem ansteigenden Querschnitt und einen dritten Abschnitt 13 mit einem größeren (zweiten) Querschnitt. Im Bereich des ersten Abschnitts 11 ist eine erste Hochdruckdüse 14 mit stromabwärts gerichtete Eindüsrichtung angeordnet. Eine zweite Hochdruckdüse 15 ähnlich der ersten Hochdruckdüse 14 ist mit ebenfalls stromabwärts gerichteter Eindüsrichtung im Bereich des zweiten Abschnittes 12 angeordnet. Die erste Hochdruckdüse 14 und die zweite Hochdruckdüse 15 sind mittels einer gemeinsamen Leitung 16 mit einer Hochdruckpumpe 17 verbunden.

Am stromabwärtigen Ende des dritten Abschnittes 13 ist eine Kondensationsanordnung 18 angeordnet. Die Kondensationsanordnung 18 weist eine stromaufwärts gerichtete Niederdruckdüse 19 sowie mehrere Rohrkondensatoren 20 auf. Als Rohrkondensatoren 20 dienen mehrere Leitbleche 20, die bewegbar, nämlich drehbar sind. Stromabwärts von den Rohrkondensatoren 20 ist ein Sumpf 21 angeordnet. Der Sumpf 21 hat einen als Überlauf ausgebildeten Auslaß 22, der mittels eines Ventils 23 absperrbar ist. Außerdem ist der Sumpf 21 mittels einer Leitung 24 und einem zwischengeschalteten Filter 25 mit einer Pumpe 26 verbunden. Die Pumpe 26 ist außerdem mit einer Leitung 27 mit einem Schwimmerschalter 28 verbunden. Die Druckseite der Pumpe 26 ist mittels einer Leitung 29 mit der Niederdruckdüse 19 verbunden. Als Pumpe 26 kann beispielsweise eine Impellerpumpe verwendet werden.

Zwischen den Rohrkondensatoren 20 und dem Sumpf 21 zweigt ein Leitungsabschnitt 30 ab, der mit einem Auslaß 31 verbunden ist. Im Bereich des Auslasses 31 ist ein Lüfter 32, nämlich Radiallüfter 32 angeordnet.

Die Saugseite der Hochdruckpumpe 17 ist mit dem Auslaß eines Behälters 33 mittels einer Leitung 34 verbunden. Der Behälter 33 ist mittels einer Leitung 35 über einen Wasserfilter 36 mit einer Wasserversorgung 37, beispielsweise einem Hauswasseranschluß 37 verbunden. Der Zulauf der Leitung 35 in den Behälter 33 ist mittels eines Schwimmerschalters 38 abgeschlossen.

Der Behälter 33 ist über eine weitere Leitung 39 mit einer Dosierpumpe 40 verbunden. Die Saugseite der Dosierpumpe 40 ist mittels einer Leitung 41 mit einem Vorrat 42, nämlich einem Kanister mit einem Enzymkonzentrat verbunden.

Dem Strömungsreaktor 10 wird am Eingang des ersten Abschnittes 11 ein in der Figur mit einem Pfeil A bezeichneter Abgasstrom zugeführt. Der erste Abschnitt 11 hat einen verhältnismäßig kleinen Querschnitt, wodurch sich eine relativ hohe Strömungsgeschwindigekeit ergibt. Aus diesem Grunde ist die Strömung im Bereich des ersten Abschnittes 11 weitgehend turbulent. In diesem Bereich turbulenter Strömung wird mittels der ersten Hochdruckdüse 14 unter einem Druck von 80 bis 100 bar eine wäßrige Enzymlösung eingedüst. Im Bereich des zweiten Abschnittes 12 weitet sich der Strömungsquerschnitt auf den Querschnitt des dritten Abschnittes 13 aus. Aus diesem Grund wird die turbulente Strömung im Bereich des zweiten Abschnittes 12 beruhigt. In diesen Übergangsbereich wird mittels der zweiten Hochdruckdüse 15 ebenfalls unter dem Druck von 80 bis 100 bar die wäßrige Enzymlösung eingedüst. Die wäßrige Enzymlösung wird mittels der Hochdruckpumpe 17 aus dem Behälter 33 entnommen, auf den Druck von 80 bis 100 bar komprimiert und über die Leitung 16 zu den Hochdruckdüsen 14, 15 gefördert. Die Hochdruckdüsen 14, 15 düsen die wäßrige Enzymlösung als feinen Nebel mit einer Tröpfchengröße unter 20 µm jeweils mit etwa 3 Liter pro Stunde in den Strömungsreaktor ein. Der so eingedüste Wirknebel benötigt hier etwa vier bis maximal zwanzig Sekunden bei anderen Abgasen um durch den dritten Abschnitt 13 hindurch zu gelangen, bis er an dessen stromabwärtigen Ende auf die Niederdruckdüse 19 trifft. Die Niederdruckdüse 19 düst entgegen der Strömungsrichtung ebenfalls eine wäßrige Enzymlösung mit einem Druck von etwa 10 bar und einer Tröpfchengröße von etwa 50 bis 60 µm ein. Bei dieser Tröpfchengröße setzt die Kondensation ein. Die nachgeschalteten Rohrkondensatoren 20 führen sodann zu einer weitgehenden Kondensation der Flüssigkeit im Strömungsreaktor 10. Das Kondensat aus Wasser, tensidischer Enzymlösung sowie darin gebundenen Restschadstoffen sammelt sich im Sumpf 21 und wird von dort über die Leitung 24 und den Filter 25 der Pumpe 26 zugeführt. Die Pumpe 26 wird über die Leitung 27 mittels des Schwimmerschalters 28 angesteuert. Die Pumpe 26 erzeugt den erforderlichen Druck für die Niederdruckdüse 19 und speist diese über die Leitung 29. Die Niederdruckdüse 19 düst etwa 5 Liter Kondensat pro Stunde ein. Der überschüssige Kondensatanteil wird über den Auslaß 22, der sich mittels des Ventils 23 absperren läßt, aus dem Sumpf 21 entfernt.

Das gereinigte und vom dem Kondensat befreite Abgas gelangt anschließend über den Leitungsabschnitt 30 in den Auslaß 31. Der Radiallüfter 32 saugt dabei das Abgas aus dem Strömungsreaktor 10 ab.

In dem Behälter 33 wird mittels des Schwimmerschalters 38 und gespeist über die Leitung 35 aus der Wasserversorgung 37 immer eine konstante Wassermenge bereitgehalten. In den Behälter 33 wird über die Leitung 39 mittels der Dosierpumpe 40 permanent die gewünschte Menge Enzym zudosiert. Die Dosierpumpe 40 erhält das von ihr geförderte Enzym über die Leitung 41 aus dem Vorrat 42.

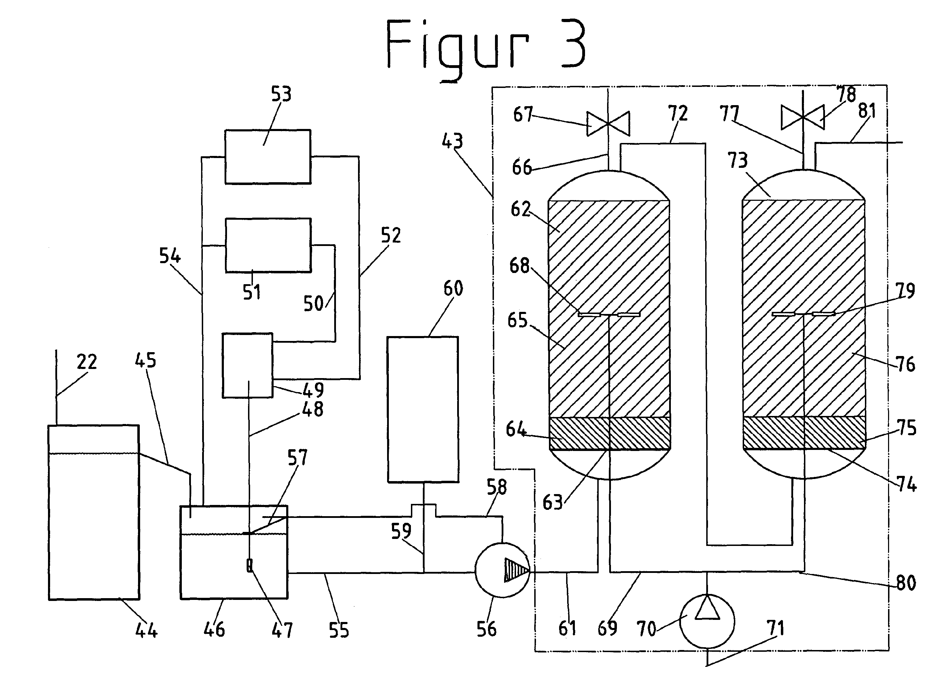

Fig. 3 zeigt eine schematische Darstellung eines Bioreaktors 43 zur biologischen Aufbereitung des Kondensats aus dem Sumpf 21 von Fig. 2. Der Bioreaktor 43 weist einen Sammelbehälter 44 auf, der mit dem Auslaß 22 des Sumpfes 21 von Fig. 2 verbunden ist. Der Sammelbehälter 44 ist mittels eines Überlaufs 45 mit einem Neutralisationsbehälter 46 verbunden.

In dem Neutralisationsbehälter 46 ist ein Aufnehmer 47 für den pH-Wert angeordnet. Der Aufnehmer 47 ist mittels einer Leitung 48 mit einer Steuerung 49 verbunden. Die Steuerung 49 ist mittels einer Leitung 50 mit einer Säuredosiereinrichtung 51 und mittels einer Leitung 52 mit einer Basedosiereinrichtung 53 verbunden. Die Säuredosiereinrichtung 51 und die Basedosiereinrichtung 53 sind mittels einer Leitung 54 mit dem Neutralisationsbehälter 46 verbunden.

Der Neutralisationsbehälter 46 ist mittels einer Leitung 55 mit einer Pumpe 56 verbunden. In dem Neutralisationsbehälter 46 ist außerdem ein Schwimmerschalter 57 angeordnet, der mittels einer Leitung 58 ebenfalls mit der Pumpe 56 verbunden ist. Die Leitung 55 ist außerdem mittels einer Leitung 59 mit einer Zudosiereinheit 60 für Wasserstoffperoxid verbunden.

Die Pumpe 56 ist mittels einer Leitung 61 mit dem Einlaß eines ersten Festbettreaktors 62 verbunden. Der erste Festbettreaktor 62 hat ein Lochblech 63, eine Stützschicht 64, ein aktiviertes Festbett 65 und eine Entlüftung 66. Die Entlüftung 66 ist mittels eines Entlüftungsventils 67 abgeschlossen. Das aktivierte Festbett 65 besteht aus Aktivkohle, Lavalit und Anthrazit sowie in diese eingelagerten Depotnährstoffen. Im Bereich des aktivierten Festbetts 65 sind mehrere Belüftungskerzen 68 angeordnet. Die Belüftungskerzen 68 bestehen aus PTFE und haben einen Porendurchmesser von etwa 0,5 µm. Die Belüftungskerzen 68 sind mittels einer Leitung 69 mit einem Kompressor 70 verbunden. Der Kompressor 70 ist mittels einer Leitung 71 beispielsweise mit der Umgebung verbunden.

Ein Auslaß des ersten Festbettreaktors 62 ist mittels einer Leitung 72 mit dem Einlaß eines zweiten Festbettreaktors 73 verbunden. Der zweite Festbettreaktor 73 ist ähnlich aufgebaut wie der erste Festbettreaktor 62. Ähnlich dem ersten Festbettreaktor 62 hat auch der zweite Festbettreaktor 73 ein Lochblech 74, eine Stützschicht 75, ein aktiviertes Festbett 76, eine mittels eines Ventils 78 abgeschlossene Entlüftung 77 sowie Belüftungskerzen 79. Ähnlich den Belüftungskerzen 68 sind auch die Belüftungskerzen 79 mittels einer Leitung 80 mit dem Kompressor 70 verbunden. Der Auslaß des zweiten Festbettreaktors 73 ist mittels einer Leitung 81 mit der Umgebung verbunden.

Das Kondensat gelangt aus dem Sumpf 21 in Fig. 2 durch den Auslaß 22 in den Sammelbehälter 44. Von dort gelangt das Kondensat dann über den Überlauf 45 in den Neutralisationsbehälter 46. Mittels des Aufnehmers 47 wird der pH-Wert des Kondensats in dem Neutralisationsbehälter 46 bestimmt. Die Steuerung 49 steuert dann entsprechend diesem bestimmten pH-Wert die Säuredosiereinrichtung 51 beziehungsweise die Basedosiereinrichtung 53 derart, daß über die Leitung 54 eine derartige Menge Säure oder Base in den Neutralisationsbehälter 46 eingeleitet wird, daß sich ein neutraler pH-Wert ergibt. Mittels des Schwimmerschalters 57 wird die Pumpe 56 angesteuert, wodurch das Kondensat aus dem Neutralisationsbehälter 46 über die Leitung 55 und die Leitung 61 in den ersten Festbettreaktor 62 gefördert wird. In die Leitung 55 wird außerdem über die Leitung 59 von der Zudosiereinheit 60 eine vorbestimmte Menge Wasserstoffperoxid zur Oxidation zudosiert. Das durch die Leitung 61 in den ersten Festbettreaktor 62 geförderte Kondensat steigt durch das Lochblech 63 und durch die Stützschicht 64 in das aktivierte Festbett 65 auf, wo es mittels der Belüftungskerzen 68 von der von dem Kompressor 70 komprimierten Luft belüftet wird. Dabei wird das Enzym in dem Kondensat nahezu vollständig oxidiert. Im ersten Festbettreaktor 62 entstehende Gase (beispielsweise Kohlendioxid durch aeroben biologischen Abbau und gegebenenfalls überschüssige Luft) können über die Entlüftung 66 mit dem Entlüftungsventil 67 abgelassen werden. Dem ersten Festbettreaktor 62 ist der zweite Festbettreaktor 73 nachgeschaltet, der auf ähnliche Weise arbeitet. Aus der Leitung 81 tritt dann das so aufbereitete Wasser aus, das direkt in einen Kanal eingeleitet werden kann.

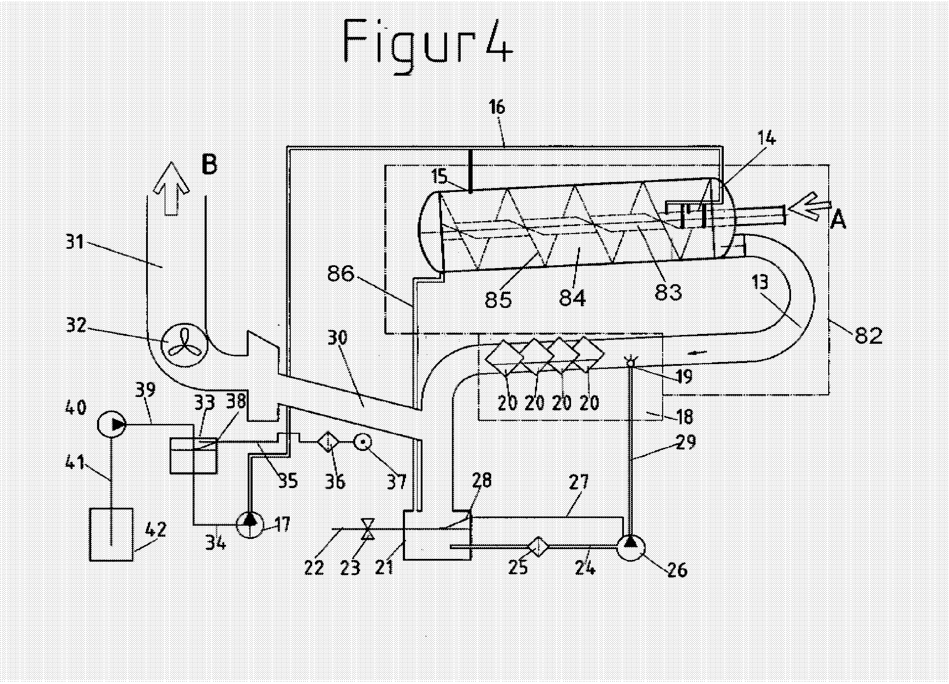

Fig. 4 zeigt eine weitere Vorrichtung zum Beseitigen von Schadstoffen aus einem Abgasstrom als ein weiteres Ausführungsbeispiel der Erfindung. Die Vorrichtung von Fig. 4 hat einen ähnlichen Aufbau wie die Vorrichtung von Fig. 2. Gleiche Elemente tragen die gleichen Bezugszeichen wie in Fig. 2. Im Gegensatz zu der Vorrichtung von Fig. 2 weist die Vorrichtung von Fig. 4 einen Strömungsreaktor 82 auf. Ähnlich dem Strömungsreaktor 10 hat der Strömungsreaktor 82 einen ersten Abschnitt 83, einen zweiten Abschnitt 84 und den dritten Abschnitt 13.

Der erste Abschnitt 83 ist bei dem Strömungsreaktor 82 eine Rohrleitung 83, die im Innern des zweiten Abschnittes 84 geführt ist. Die Rohrleitung 83 und der zweite Abschnitt 84 haben bei dem in Fig. 4 dargestellten Ausführungsbeispiel jeweils einen runden Querschnitt. Die Rohrleitung 83 weist einen geringeren Querschnitt auf als der zweite Abschnitt 84 und verläuft in etwa zentral in diesem. Die voneinander abgewandten stirnseitigen Enden des zweiten Abschnittes 84 sind jeweils mit einer abgerundeten, nach außen hin gewölbten Wand verschlossen. Zwischen der Rohrleitung 83 und der diese umgebenden Wand des zweiten Abschnittes 84 sind Leitbleche 85 angeordnet. Die Leitbleche 85 verlaufen schraubenförmig ähnlich den Schneckenflügeln eines Schneckenförderers und sind an der Rohrleitung 83 und dem zweiten Abschnitt 84 angeschweißt

Im Bereich der Rohrleitung 83 sind mehrere stromabwärts gerichtete Hochdruckdüsen 14 angeordnet. In der Figur sind vier Hochdruckdüsen 14 dargestellt. Eine weitere Hochdruckdüsen 15 ähnlich den Hochdruckdüsen 14 ist mit ebenfalls stromabwärts gerichteter Eindüsrichtung im Bereich des zweiten Abschnittes 84 angeordnet. Ein Auslaß des zweiten Abschnittes 84 ist mit dem dritten Abschnitt 13 verbunden. An seiner von dem dritten Abschnitt 13 abgewandten Seite ist im Bereich des zweiten Abschnittes 84 eine Leitung 86 angeordnet. Die Leitung 86 verbindet den zweiten Abschnitt 84 mit dem Sumpf 21. Der zweite Abschnitt 84 ist derart geneigt angeordnet, daß die Verbindungsstelle mit der Leitung 86 den tiefsten Punkt des zweiten Abschnittes 84 bildet.

Durch einen Pfeil A ist in der Fig. 4 die Zufuhr eines Abgasstromes zu dem Strömungsreaktor 82 dargestellt. In der Rohrleitung 83 mit verhältnismäßig geringem Innendurchmesser herrscht eine turbulente Strömung vor. In diese turbulente Strömung wird mittels der Hochdruckdüsen 14 das Enzym eingedüst. Am Ende der Rohrleitung 83 gelangt der Abgasstrom in den zweiten Abschnitt 84. Mit dem Austritt aus der Rohrleitung 83 geht die turbulente Strömung in eine laminare Stopfenströmung über, weil der Querschnitt des zweiten Abschnittes 84 größer ist als der des ersten Abschnittes 83. Diese laminare Strömung wird mittels der Leitbleche 85 schraubenförmig um die Rohrleitung 83 herum in Richtung auf den Einlaß der Rohrleitung 83 in zurückgeführt. In etwa unterhalb des Einlasses der Rohrleitung 83 ist der zweite Abschnitt 84 dann mit dem dritten Abschnitt 13 verbunden. Mittels der Hochdruckdüsen 15 wird zusätzlich wäßrige Enzymlösung in den Bereich der laminaren Strömung in den zweiten Abschnitt 84 eingedüst. Aus dem Abgasstrom auskondensierende Flüssigkeit sammelt sich im tiefsten Punkt des zweiten Abschnittes 84 und wird von dort mittels der Leitung 86 in den Sumpf 21 abgeleitet. Zu diesem Zweck ist zwischen den Leitblechen 85 und der Außenwand des zweiten Abschnittes 84 in der Figur an der Unterseite eine Aussparung vorgesehen, so daß sich im gesamten Bereich des zweiten Abschnittes 84 auskondensierende Flüssigkeiten ungehindert auch gegen den Abgasstrom in Richtung auf die Leitung 86 ableiten lassen.

Mit dem in Fig. 4 gezeigten Strömungsreaktor 82 läßt sich ein wesentlich kompakterer Aufbau erreichen als mit dem Strömungsreaktor 10. So ist beispielsweise bei einem Abgasstromes von 25.000 Kubikmetern pro Stunde eine um einen Faktor 100 geringere Gesamtlänge erforderlich als bei dem Strömungsreaktor 10. Mit dem Strömungsreaktor 82 wird in dem zweiten Abschnitt 84 eine laminare Stopfenströmung erzielt, bei der unerwünschte Toträume vermieden werden und sich einer hohe Verweildauer ergibt. Für kleinere Abgasreinigungsvorrichtungen mit einem geringeren Durchsatz kann der Strömungsreaktor 82 auch derart aufrecht positioniert werden, daß in dem zweiten Abschnitt 84 der Abgasstrom schraubenförmig an der Rohrleitung 83 längs vorbeigeführt wird. Die Verwendung des Strömungsreaktors 10 und insbesondere des Strömungsreaktors 82 ist nicht auf die dargestellten Vorrichtungen zum Beseitigen von Schadstoffen beschränkt. Insbesondere ist die Verwendung der Strömungsreaktoren 10, 82 auch bei anderen Vorrichtungen zweckmäßig, bei denen eine effiziente Reaktion eines Gasstromes mit einer Flüssigkeit oder mit einem Katalysator in flüssiger Form stattfinden sollen. Bei Bedarf können wesentliche oder alle Komponenten der Strömungsreaktoren nach den verschiedenen Ausführungsbeispielen auch explosionsgeschützt ausgeführt sein.

### Bezugszeichenliste:

- 10: Strömungsreaktor
- 11: erster Abschnitt
- 12: zweiter Abschnitt
- 13: dritter Abschnitt
- 14: erste Hochdruckdüse
- 15: zweite Hochdruckdüse
- 16: Leitung
- 17: Hochdruckpumpe
- 18: Kondensationsanordnung
- 19: Niederdruckdüse
- 20: Rohrkondensatoren
- 21: Sumpf
- 22: Auslaß
- 23: Ventil
- 24: Leitung
- 25: Filter
- 26: Pumpe
- 27: Leitung
- 28: Schwimmerschalter
- 29: Leitung
- 30: Leitungsabschnitt
- 31: Auslaß
- 32: Radiallüfter
- 33: Behälter
- 34: Leitung
- 35: Leitung
- 36: Filter
- 37: Wasserversorgung
- 38: Schwimmerschalter
- 39: Leitung
- 40: Dosierpumpe
- 41: Leitung
- 42: Vorrat
- 43: Bioreaktor
- 44: Sammelbehälter
- 45: Überlauf
- 46: Neutralisationsbehälter
- 47: Aufnehmer
- 48: Leitung
- 49: Steuerung
- 50: Leitung
- 51: Säuredosiereinrichtung
- 52: Leitung
- 53: Basedosiereinrichtung
- 54: Leitung
- 55: Leitung
- 56: Pumpe
- 57: Schwimmerschalter
- 58: Leitung
- 59: Leitung
- 60: Zudosiereinheit
- 61: Leitung
- 62: Festbettreaktor
- 63: Lochblech
- 64: Stützschicht
- 65: aktiviertes Festbett
- 66: Entlüftung
- 67: Ventil
- 68: Belüftungskerze
- 69: Leitung
- 70: Kompressor
- 71: Leitung
- 72: Leitung
- 73: Festbettreaktor
- 74: Lochblech
- 75: Stützschicht
- 76: aktiviertes Festbett
- 77: Entlüftung
- 78: Ventil
- 79: Belüftungskerze
- 80: Leitung
- 81: Leitung
- 82: Strömungsreaktor
- 83: erster Abschnitt
- 84: zweite Abschnitt
- 85: Leitblech
- 86: Leitung

## Patentansprüche

1. Verfahren zum Beseitigen von, insbesondere beim anaeroben Abbau organischen Materials entstehenden, Schadstoffen aus einem Abgasstrom, **dadurch gekennzeichnet, daß** ein Enzym feinstverteilt in den Abgasstrom eingebracht wird.

2. Verfahren nach Anspruch 1, **dadurch gekennzeichnet, daß** das Enzym in wäßriger, vorzugsweise tensidischer, Lösung als Nebel in den Abgasstrom eingebracht wird, insbesondere mit einer Tröpfchengröße von etwa 20 µm oder weniger, wobei die Lösung vorzugsweise unter hohem Druck, von insbesondere 80 bis 100 bar, in den Abgasstrom eingedüst wird.

3. Verfahren nach einem der vorhergehenden Ansprüche, **dadurch gekennzeichnet, daß** das Enzym in einem ersten Stromabschnitt (11, 83) mit turbulenter Strömung und/oder in einem zweiten Stromabschnitt (12, 84) mit einem Übergang von turbulenter zu laminarer Strömung und/oder mit einer Stopfenströmung und/oder in einem dritten Stromabschnitt (13) mit laminarer Strömung in den Abgasstrom eingebracht wird, wobei vorzugsweise der Abgasstrom in dem zweiten Stromabschnitt (84) zu dem Abgasstrom in dem ersten Stromabschnitt (83) entgegengesetzt gerichtet ist und insbesondere schraubenförmig um den Abgasstrom in dem ersten Stromabschnitt (83) geleitet wird.

4. Verfahren nach einem der vorhergehenden Ansprüche, **dadurch gekennzeichnet, daß** die Schadstoffkonzentrationen und/oder die Schadstoffzusammensetzung bestimmt wird, und abhängig von diesem Bestimmen die Enzymmenge, die Enzymart und/oder das Mischungsverhältnis eines Enzymgemisches aus mehreren Enzymen eingestellt wird.

5. Verfahren nach einem der vorhergehenden Ansprüche, **dadurch gekennzeichnet, daß** in einem vierten Stromabschnitt stromabwärts vom Einbringen des Enzyms das Enzym aus dem Abgasstrom entfernt wird, wobei die Enzymlösung vorzugsweise zum Entfernen kondensiert und insbesondere zumindest ein Teil der kondensierten Enzymlösung, vorzugsweise als Nebel, insbesondere mit einer Tröpfchengröße von etwa 50 bis 60 µm, in den Abgasstrom rückgeführt, insbesondere unter einem geringen Druck, von vorzugsweise 10 bar, eingedüst wird.

6. Verfahren nach Anspruch 5, **dadurch gekennzeichnet, daß** das entfernte Enzym in den Vorfluter einer Kläranlage oder in einer Güllegrube eingeleitet, auf die Rotten einer Kompostieranlage aufgesprüht, in einem Bioreaktor (43) abgebaut, der pH-Wert des Enzyms bestimmt, und eine Säure oder Base zur Neutralisation zugesetzt, dem Enzym ein Oxidationsmittel, insbesondere Wasserstoffperoxid, zugesetzt, oder daß das Enzym in einem Oxidationsreaktor, vorzugsweise mittels Frischluftzufuhr, oxidiert wird.

7. Vorrichtung zum Beseitigen von, insbesondere beim anaeroben Abbau organischen Materials entstehenden, Schadstoffen aus einem Abgasstrom, mit einer Reaktoranordnung, **dadurch gekennzeichnet, daß** die Reaktoranordnung einen Strömungsreaktor (10, 82), der vorzugsweise in Strömungsrichtung ein monotones Gefälle aufweist, und Einbringmittel (14, 15) aufweist, mittels derer mindestens ein Enzym in Lösung feinstverteilt in den Strömungsreaktor (10, 82) einbringbar ist.

8. Vorrichtung nach Anspruch 7, **dadurch gekennzeichnet, daß** der Strömungsreaktor (10) einen ersten Abschnitt (11) mit einem ersten Querabschnitt, einen zweiten Abschnitt (12) mit einem von dem ersten Querabschnitt auf einen größeren zweiten Querabschnitt ansteigenden Querschnitt und einen dritten Abschnitt (13) mit dem zweiten Querschnitt aufweist, oder daß der Strömungsreaktor (82) einen ersten Abschnitt (83) mit einem ersten Querschnitt und einen zweiten Abschnitt (84) mit einem größeren zweiten Querschnitt aufweist, wobei der erste Abschnitt (83) vorzugsweise in etwa axial in dem zweiten Abschnitt (84) angeordnet ist, und daß die Strömung in dem zweiten Abschnitt (84) zu der Strömung in dem ersten Abschnitt (83) entgegengerichtet ist und der zweite Abschnitt (84) insbesondere Leitmittel (85) zum Leiten der Strömung, vorzugsweise schraubenförmig, um den ersten Abschnitt (83) aufweist.

9. Vorrichtung nach Anspruch 7 oder 8, **dadurch gekennzeichnet, daß** Ableitmittel (86), vorzugsweise an der tiefsten Stelle des ersten Abschnittes (83) und des zweiten Abschnitt des (84), zum Ableiten auskondensierender Flüssigkeit vorgesehen sind.

10. Vorrichtung nach einem der Ansprüche 7 bis 9, **dadurch gekennzeichnet, daß** die Einbringmittel (14, 15) mindestens zwei Hochdruckdüsen (14, 15) aufweisen, deren Eindüsrichtung etwa stromabwärts gerichtet ist, mittels derer das Enzym vorzugsweise mindestens in den ersten Abschnitt (11, 83) und/oder den zweiten Abschnitt (12, 84) einbringbar ist, und daß vorzugsweise eine Hochdruckpumpe (17) für die Hochdruckdüsen (14, 15) vorgesehen ist.

11. Vorrichtung nach einem der Ansprüche 7 bis 10, **gekennzeichnet durch** eine Mischanordnung (33) zum Anmischen und Bereithalten einer wäßrigen Lösung des Enzyms, und vorzugsweise **durch** Dosiermittel (40) zum Dosieren des Enzyms aus einem Vorrat (42) und **durch** eine Wasserzuführung (35), mit der vorzugsweise Wasser mittels eines Schwimmerschalters (38) kontrolliert in einen Behälter (33) einleitbar ist.

12. Vorrichtung nach einem der Ansprüche 7 bis 11, **gekennzeichnet durch** Kondensationsmittel (19, 20), die vorteilhafterweise mindestens ein, vorzugsweise bewegbares, insbesondere drehbares, Leitblech (20) zum Ablenken des Abgasstroms aufweisen, zum Entfernen des Enzyms aus dem Abgasstrom, vorzugsweise **durch** einen Sumpf (21) zum Auffangen des Kondensats, wobei insbesondere die Ableitmittel (86) mit dem Sumpf (21) verbunden sind, und vorteilhafterweise **durch** eine Rückführung des Kondensats in den Strömungsreaktor in feinverteilter Form zum Starten der Kondensation, vorzugsweise mittels etwa stromaufwärts gerichteter Niederdruckdüsen (19).

13. Vorrichtung nach Anspruch 12, **gekennzeichnet durch** Ableitmittel (22) zum Ableiten des Kondensats, vorzugsweise in den Vorfluter einer Kläranlage, eine Güllegrube, einen Bioreaktor (43) oder auf die Rotten einer Kompostieranlage, insbesondere **durch** Neutralisationsmittel (51, 53), die vorzugsweise einen Aufnehmer (47) zum Erfassen des pH-Wertes des Kondensats und Dosiermittel (51, 53) zum Zugeben einer Säure oder einer Base zu dem Kondensat aufweisen und vorteilhafterweise **durch** Oxidationsmittel (60, 68, 79), insbesondere mittels Zugabe von Wasserstoffperoxid und/oder Sauerstoff, vorzugsweise Luft.

14. Vorrichtung nach Anspruch 13, **dadurch gekennzeichnet, daß** der Bioreaktor (43) mindestens einen Festbettreaktor (62, 73), mit vorzugsweise einem aktivierten Festbett (65, 76), insbesondere bestehend aus Aktivkohle, Lavalit, Depotnährstoffen und Anthrazit, oder Belüftungskerzen (68, 79), vorzugsweise aus PTFE und insbesondere mit einer Porengröße von etwa 0,5 µm, zum Belüften, vorzugsweise mittels Sauerstoff, insbesondere mittels Luft, aufweist.
